# EUROPÄISCHE PATENTSCHRIFT

(11) **EP 1 325 862 B1**
(45) Veröffentlichungstag und Bekanntmachung des Hinweises auf die Patenterteilung: **15.08.2007**
(21) Anmeldenummer: 02028319.8
(22) Anmeldetag: 17.12.2002
(51) Int. Cl.: B62D 65/00, B62D 25/06

(54) **Modulartiges Fahrzeugdach**
Modular vehicle roof
Toit modulaire de véhicule

(30) Priorität: 21.12.2001 DE 10163709
(43) Veröffentlichungstag der Anmeldung: 09.07.2003
(73) Patentinhaber: ArvinMeritor GmbH, 63128 Dietzenbach (DE)
(72) Erfinder: Stallfort, Klaus, Dipl.-Ing., 61273 Wehrheim (DE); Schönebeck, Horst, 63571 Gelnhausen (DE)
(74) Vertreter: Oppermann, Ewald

(56) Entgegenhaltungen:
- EP-A- 0 960 804
- DE-A- 19 817 056
- DE-A- 19 852 383

## Beschreibung

Die Erfindung bezieht sich auf ein insbesondere für Kraftfahrzeuge bestimmtes modulartiges Fahrzeugdach entsprechend dem Oberbegriff des Patentanspruchs 1.

Derartige modulartige einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband haben solche Fahrzeugdachmodule zunehmende Bedeutung erlangt.

EP 0 960 804 A2 offenbart die Merkmale des Oberbegriffs des Anspruchs 1.

Bei einem bekannten Fahrzeugdach (DE 197 09 016 A1) ist in einem Ausführungsbeispiel einer in der Dachhaut vorgesehenen Dachöffnung, welche einer Öffnung in der Innenschale entspricht, ein Schiebedeckel einer vormontierten Schiebedacheinheit zugeordnet, der beispielsweise als Glasdeckel ausgebildet ist, so daß auch bei die Dachöffnung verschließendem Glasdeckel Licht in den Fahrzeuginnenraum gelangen kann. Zu einer Schiebedacheinheit mit ihren unbestreitbaren Vorzügen gehören jedoch u.a. ein Schiebedachrahmen, Führungselemente für den Schiebedeckel und Antriebselemente dafür, wodurch das Fahrzeugdachmodul einen erheblichen Fertigungs- und Montageaufwand erforderlich macht. Außerdem erhöht eine Schiebedacheinheit das Gewicht des Fahrzeugdachmoduls und hat unvermeidbar eine beträchtliche Bauhöhe, die entweder der für die gewünschte Kopffreiheit der Fahrzeuginsassen erforderlichen Höhe des Fahrzeuginnenraums hinzuzurechnen ist, was die Gesamthöhe der Fahrzeugkarosserie in einem unerwünschten Maß vergrößern kann, oder welche auf Kosten der Kopffreiheit die Höhe des Fahrzeuginnenraums verringert.

Es wurde auch schon vorgeschlagen (DE 100 15 504 A1), den Fertigungs- und Montageaufwand bei einem Dachmodul mit einer aus Kunststoff gebildeten Dachhaut dadurch zu verringern, daß die Funktionselemente einer Schiebedacheinheit in die Dachhaut integriert sind. Dabei kann hinter der Dachöffnung für den verstellbaren Deckel eine nicht näher beschriebene Fläche der Dachhaut vorgesehen sein, welche transparent ausgebildet sein kann, um in diesem Bereich Licht in den Fahrzeuginnenraum gelangen zu lassen.

Aufgabe der vorliegenden Erfindung ist die Bereitstellung eines modulartig vorgefertigten Fahrzeugdachs der eingangs angegebenen Ausbildung, welche sich durch einen verhältnismäßig geringen Fertigungsaufwand auszeichnet und dazu von vergleichsweise niedrigem Gewicht und kleiner Bauhöhe ist.

Diese Aufgabe wird durch die im Patentanspruch 1 angegebenen Merkmale gelöst. Vorteilhafte oder zweckmäßige Weiterbildungen gehen aus den Unteransprüchen hervor und sind nachfolgend ebenfalls näher erläutert.

Das erfindungsgemäß ausgebildete modulartige Fahrzeugdach sieht innerhalb der Dachöffnung eine transparente Platte, z.B. eine durchsichtige Glas- oder Kunststoffplatte, vor, deren Außenfläche etwa bündig mit der Außenfläche der Dachhaut liegt und die mit einem umlaufend in die Dachöffnung vorstehenden Flanschrand der Innenschale unter Abdichtung eines zwischen dem Außenumfang der transparenten Platte und dem Umfangsrand der Dachöffnung umlaufend vorgesehenen Spaltraums fest verbunden ist.

Das erfindungsgemäße modulartige Fahrzeugdach läßt sich in wenigen Arbeitsgängen fertigen und besitzt bei niedrigem Gewicht nur eine kleine Bauhöhe. Da die transparente Platte fest im Dachmodul angeordnet ist, muß bei der Festlegung ihrer geometrischen Außenkontur nicht auf eine Verschiebbarkeit oder Verlagerbarkeit innerhalb der Dachöffnung Rücksicht genommen werden, so daß für ihre Außenkontur und auch für ihre Abmessungen weitgehende Gestaltungsfreiheiten gegeben sind. Die transparente Platte läßt sich allen Wölbungen der Dachhaut anpassen, so daß zwischen der transparenten Platte und der Dachhaut keine störenden Wölbungsübergänge entstehen. Da die Außenflächen von Dachhaut und transparenter Platte etwa bündig liegen, entstehen auch keine den Plattenaußenumfang markierenden störenden Stufen. Auch ist kein sichtbarer Spaltraum zwischen dem Außenumfang der transparenten Platte und dem Umfangsrand der Dachöffnung vorhanden, weil dieser Spaltraum abgedichtet gefüllt bzw. verschlossen ist.

Vorzugsweise ist entsprechend Anspruch 2 der Flanschrand der Innenschale an die transparente Platte angeschäumt, so daß die äußere Dachhaut und die transparente Platte in einem Arbeitsgang, dem Schäumvorgang, in derselben Schäumform richtig gegenseitig positioniert vereinigt werden können. Zweckmäßig ist hierbei gemäß Anspruch 3 die transparente Platte im Bereich des Flanschrandes haftungsvermittelnd beschichtet, beispielsweise durch eine im Siebdruckverfahren aufgetragene Primerschicht, die zugleich den Flanschrand von außen unsichtbar abdeckt.

Die transparente Platte kann aber alternativ auch nachträglich auf den beim Schäumvorgang gebildeten Flanschrand der Innenschale aufgeklebt sein, wie das im Anspruch 4 angegeben ist.

Für die abgedichtete Füllung bzw. die Verschließung des zwischen dem Außenumfang der transparenten Platte und dem Umfangsrand der Dachöffnung umlaufend vorgesehenen Spaltraums, welcher erhebliche Fertigungstoleranzen sowohl der Abmessungen der Dachöffnung als auch der Abmessungen der transparenten Platte zuläßt, stehen mehrere vorteilhafte Möglichkeiten zur Verfügung. Die einfachste Möglichkeit ist im Anspruch 5 angegeben und sieht vor, daß der in Rede stehende Spaltraum mit dem Schaumkunststoff der Innenschale ausgeschäumt ist. Hierbei wird der Spaltraum bereits beim Schäumvorgang gefüllt, wobei lediglich in der Schäumform dafür Sorge zu tragen ist, daß zwischen den Außenflächen der Dachhaut und der transparenten Platte der Spaltraum lediglich glattflächig ohne Überlappungen durch den Schaumkunststoff überbrückt wird.

Die Schließung des Spaltraums kann jedoch gemäß Anspruch 6 auch durch Einschäumung eines T-förmigen Gummiprofils in den Spaltraum vorgenommen werden, welches sowohl den Umfangsrand der Dachöffnung als auch den Außenumfang der transparenten Platte jeweils dicht anliegend überlappt. Hierbei ist es für die äußere Glattflächigkeit des Fahrzeugdachs von Vorteil, wenn die äußere Dachhaut, wie im Anspruch 7 angegeben, um die Dachöffnung umlaufend mit einer stufenförmigen Einprägung versehen ist, welche das Gummiprofil im Überlappungsbereich mit der Dachhaut aufnimmt.

Schließlich kann der Spaltraum entsprechend Anspruch 8 auch insgesamt durch ein am Außenumfangsrand der Dachöffnung festgelegtes elastisches Dichtungsprofil ausgefüllt und dicht geschlossen sein, das mit einem Randstreifen den Außenumfang der transparenten Platte unterfängt. Ein derartiges elastisches Dichtungsprofil kann ähnlich einer Randspaltabdichtung an Schiebedächern nicht nur eine zuverlässige Abdichtung herbeiführen, sondern es kann auch Fertigungstoleranzen und Ausdehnungsunterschiede zwischen der transparenten Platte und der festen bzw. starren äußeren Dachhaut, die aufgrund unterschiedlicher Ausdehnungskoeffizienten der verwendeten Werkstoffe auftreten können, wirksam ausgleichen.

Der die transparente Platte auflagernde Flanschrand der Innenschale kann vorteilhaft entsprechend Anspruch 9 an einem die Dachöffnung rahmenartig umgebenden verdickten Bereich der Innenschale ausgebildet sein, wodurch das modulartige Fahrzeugdach zugleich eine wirksame Aussteifung erfährt. Diese kann noch gemäß Anspruch 10 verbessert werden, wenn in den verdickten Bereich der Innenschale metallische Versteifungsprofile eingeschäumt sind. Diese eröffnen die vorteilhafte Möglichkeit der Ausbildung von topfartigen Anschraubstellen am Versteifungsprofil für die Befestigung etwaiger Abschattungselemente od.dgl.

Weitere Einzelheiten der Erfindung werden nachfolgend anhand der mehrere Ausführungsbeispiele darstellenden Zeichnungen näher erläutert. Darin zeigt:
- Fig. 1: eine schematische Perspektivansicht eines schon an einer Kraftfahrzeugkarosserie angebrachten Fahrzeugdachmoduls,
- Fig. 2: den abgebrochenen Schnitt entsprechend der Schnittverlaufslinie A-A in Fig. 1 durch eine erste Ausführungsform des Fahrzeugdachmoduls,
- Fig. 3: den abgebrochenen Schnitt entsprechend der Schnittverlaufslinie A-A in Fig. 1 durch eine zweite Ausführungsform des Fahrzeugdachmoduls und
- Fig. 4: den abgebrochenen Schnitt entsprechend der Schnittverlaufslinie A-A in Fig. 1 durch eine dritte Ausführungsform des Fahrzeugdachmoduls.

Das aus den Zeichnungen ersichtliche modulartige Fahrzeugdach 1 besteht, wie weiter unten noch näher ausgeführt wird, aus einer aus einem metallischen Werkstoff, z.B. Stahlblech, oder einer Kunststoff-Folie geformten Außenschale oder Dachhaut 2 und einer damit sandwichartig verbundenen Innenschale 3, die aus einem Schaumkunststoff, beispielsweise einem Hartschaum auf PUR-Basis, geformt ist. Die Innenschale 3 ist der Dachhaut 2 in einer Schäumform (nicht dargestellt) zur festen Verbindung aufgeschäumt. Alle Konturen der Innenschale 3 werden durch entsprechende Formgebung der Schäumform gebildet. Dem Schaumkunststoff können zur Erhöhung der Festigkeit vor dem Aufschäumen Faserstoffe, beispielsweise Glasfaserabschnitte, einverleibt sein. Aber auch in die Schäumform eingelegte Gewebe, Gewirke, Vliese u.dgl. sind als Armierung geeignet.

Das modulartige Fahrzeugdach 1 ist mit seinen Außenrändern auf einen Karosserierahmen 4 auflegbar und mit diesem fest verbindbar. Zu diesem Zweck ist in den Schaumkunststoff der Innenschale 3 eine nach unten offene Aufnahmenut 5 für eine Klebstoffraupe 6 eingeformt. Die Klebstoffraupe 6 befestigt das Fahrzeugdach 1 nicht nur am Karosserierahmen 4, sondern dichtet das Fahrzeugdach auch gegenüber dem Karosserierahmen ab.

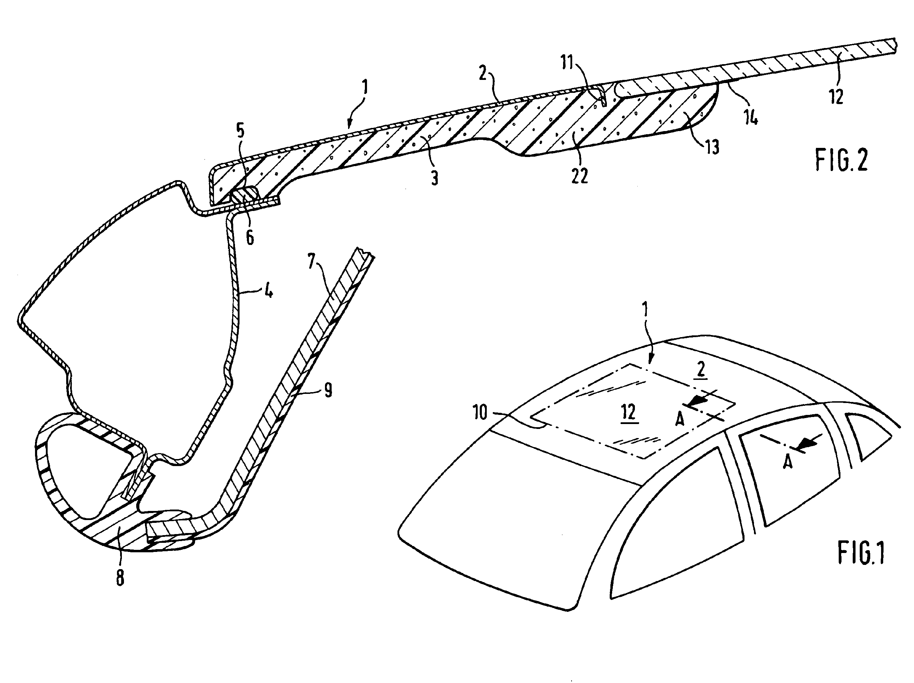

Wie aus den Figuren 2 bis 4 hervorgeht, ist ein nach oben zu abgebrochen dargestellter Himmel 7 vorgesehen, der über ein Kederprofil 8 mit dem Karosserierahmen 4 verbunden ist. Der Himmel 7 kann ein vom Fahrzeugdach 1 getrennt hergestellter schalenförmig ausgebildeter Formhimmel sein, kann aber auch einstückig mit der Innenschale 3 verbunden sein, wie das in der DE 197 09 016 A1 beschrieben ist. Die Innenfläche des Himmels 7, d.h. seine dem Fahrzeuginnenraum zugekehrte Fläche, kann zur dekorativen Ausgestaltung mit einem textilen oder folienartigen Bezugsmaterial 9 beschichtet sein.

In der Dachhaut 2 befindet sich eine Dachöffnung 10, die in Fig. 1 in strichpunktierten Linien angedeutet ist. Bei allen Ausführungsbeispielen wird die Dachöffnung 10 durch eine um die Dachöffnung umlaufende, nach unten gerichtete Abkantung 11 begrenzt. Innerhalb der Dachöffnung 10 ist für den Lichteintritt in den Fahrzeuginnenraum eine transparente Platte 12 angeordnet, die vorzugsweise aus durchsichtigem Glas oder einem geeigneten durchsichtigen Kunststoff besteht und mit einer wärmedämmenden sowie gegenüber einem übermäßigen UV-Strahlenanteil schützenden Ausrüstung oder Beschichtung versehen sein kann. Die Außenfläche der transparenten Platte 12 liegt etwa bündig mit der Außenfläche der Dachhaut 2. Umlaufend steht in die Dachöffnung 10 ein Flanschrand 13 der Innenschale 3 vor, mit welchem die transparente Platte 12 unter Abdichtung eines zwischen dem Außenumfang der transparenten Platte 12 und dem Umfangsrand der Dachöffnung 10, d.h. der Abkantung 11, umlaufend vorgesehenen Spaltraums fest verbunden ist.

Zur festen Verbindung kann der Flanschrand 13 der Innenschale 3 an die transparente Platte 12 angeschäumt sein, wozu diese positioniert in die Schäumform einzulegen ist. Zur Verbesserung der Verbindung kann die transparente Platte 12 im Bereich des Flanschrandes 13 mit einer haftungsvermittelnden beispielsweise im Siebdruckverfahren aufgetragenen Beschichtung 14 versehen sein, wie nur in Fig. 2 angedeutet ist, die zugleich den Flanschrand 13 der Sichtbarkeit von oben her entzieht. Alternativ kann die transparente Platte 12 dem Flanschrand 13 auch mittels eines geeigneten Klebers aufgeklebt sein.

Bei dem in Fig. 2 dargestellten Ausführungsbeispiel ist der Spaltraum zwischen dem Außenumfang der transparenten Platte 12 und dem Umfangsrand der Dachöffnung 10, d.h. der Abkantung 11, mit dem Schaumkunststoff der Innenschale 3 ausgeschäumt. Bei diesem Ausführungsbeispiel wird also der Spaltraum beim Schäumvorgang geschlossen.

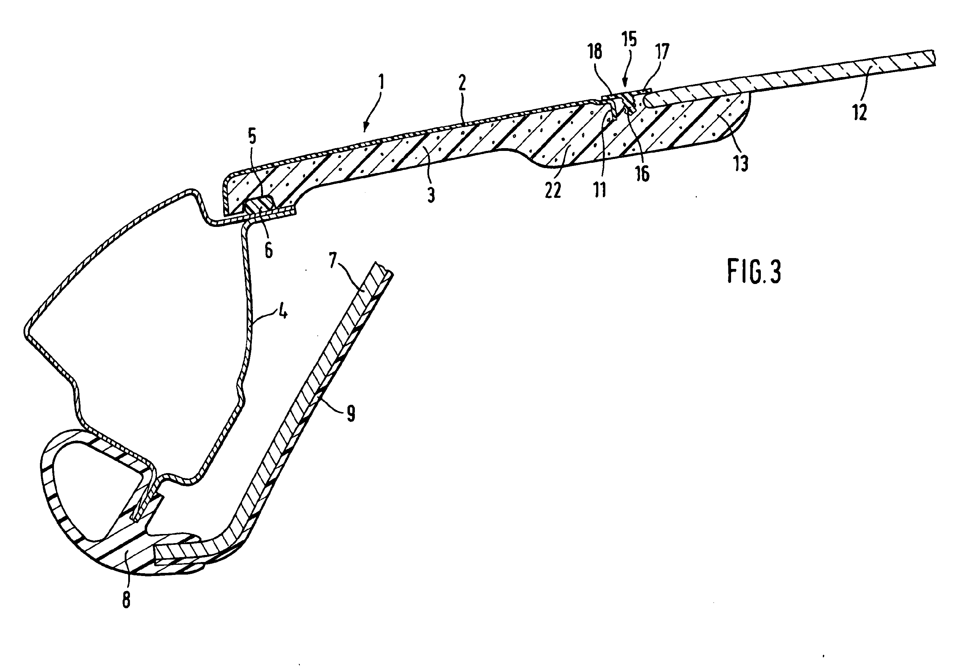

Bei dem in Fig. 3 dargestellten Ausführungsbeispiel ist dagegen in den Spaltraum zwischen dem Außenumfang der transparenten Platte 12 und dem Umfangsrand der Dachöffnung 10, d.h. der Abkantung 11, ein T-förmiges Gummiprofil 15 umlaufend mit seinem Stegstreifen 16 mittels des Schaumkunststoffs der Innenschale 3 eingeschäumt. Der Flanschstreifen 17 des Gummiprofils 15 überlappt der transparenten Platte dicht anliegend deren Außenumfang, während der Flanschstreifen 18 des Gummiprofils 15 den Umfangsrand der Dachöffnung 10 dicht anliegend überlappt. Um hier eine bündige Lage des Flanschstreifens 18 zu erzielen, kann die äußere Dachhaut 2 um den Umfangsrand der Dachöffnung 10 umlaufend mit einer stufenförmigen Einprägung 19 zur bündigen Aufnahme des Flanschstreifens 18 versehen sein.

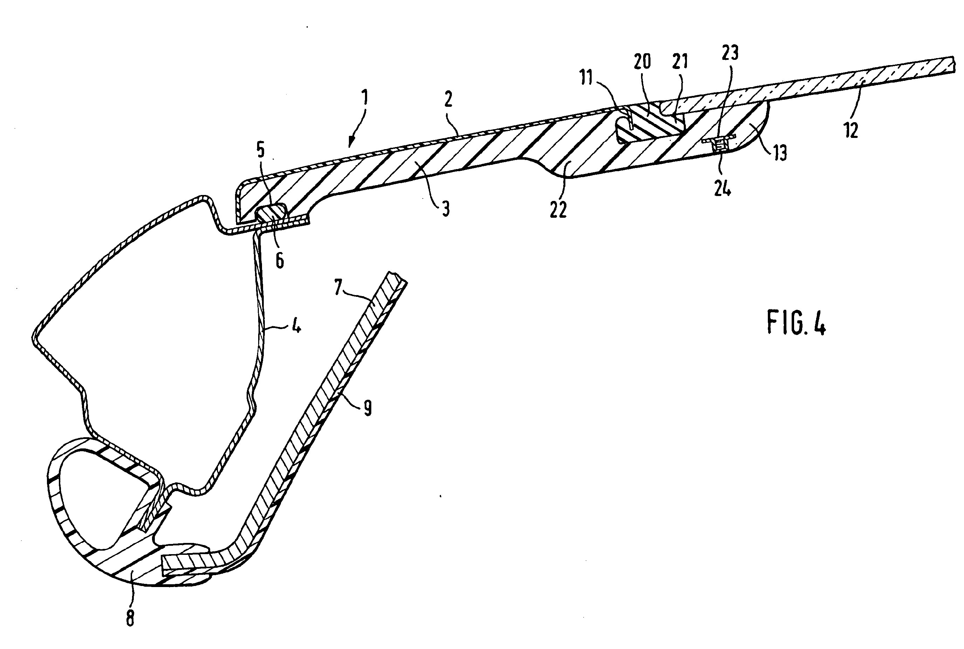

Bei dem in Fig. 4 dargestellten Ausführungsbeispiel ist der Spaltraum zwischen dem Außenumfang der transparenten Platte 12 und dem Umfangsrand der Dachöffnung 10, d.h. der Abkantung 11, umlaufend durch ein am Umfangsrand durch Aufstecken auf die Abkantung 11 festgelegtes elastisches Dichtungsprofil 20 geschlossen. Das Dichtungsprofil 20, das nach Art der Randspaltabdichtungen an Schiebedachkonstruktionen auch ein Hohlkammerprofil sein kann, unterfängt mit einem Randstreifen 21 umlaufend den Außenumfang der transparenten Platte 12.

Der Flanschrand 13 der Innenschale 3 ist an einem die Dachöffnung rahmenartig umgebenden und versteifenden verdickten Bereich 22 der Innenschale 3 ausgebildet. In diesen verdickten Bereich 22 der Innenschale 3 kann ein metallisches Versteifungsprofil 23 eingeschäumt sein, wie nur in Fig. 4 dargestellt ist, aber auch bei den Ausführungsbeispielen gemäß Fig. 2 und 3 erfolgen kann. Dieses Versteifungsprofil 23 kann mit von unten zugänglichen topfartigen Anschraubstellen 24 versehen sein, um weitere Elemente des modulartigen Fahrzeugdachs, beispielsweise Abschattungselemente od.dgl., an der Innenschale 3 durch Anschrauben befestigen zu können.

Für die Dachhaut 1 kommen als Werkstoffe karosseriebaufähige Stahlbleche oder Bleche aus Aluminiumlegierungen in Betracht, die zur Formgebung der Dachhaut 1 tiefziehbar sind. Aber auch vakuumtiefziehbare Folien aus thermoplastischen Kunststoffen sind dafür geeignet. Es können auch zweischichtige Koextrusionsfolien eingesetzt werden, deren äußere Schicht beispielsweise aus Polymethylmethacrylat (PMMA) und deren innere Schicht beispielsweise aus einer Mischung aus Polycarbonat (PC) und Acrylnitril-Styrol-Acrylsäureester-Copolymerisat (ASA) besteht.

Vorgeschlagen wird ein modulartiges Fahrzeugdach, insbesondere Kraftfahrzeugdach, mit einer metallischen äußeren Dachhaut als Außenschale und einer damit sandwichartig fest verbundenen vorzugsweise aufgeschäumten Innenschale aus Schaumkunststoff. In das Fahrzeugdach ist etwa außenflächenbündig eine vorzugsweise durchsichtige Platte aus Glas oder Kunststoff auf besondere Weise eingelassen, befestigt und abgedichtet, die einen Lichteinfall in den Fahrzeuginnenraum ermöglicht. Das modulartige Fahrzeugdach ist kostengünstig einfach herzustellen, ist leicht und besitzt nur eine geringe Bauhöhe.

### Bezugszeichenliste

- 1: modulartiges Fahrzeugdach
- 2: Dachhaut
- 3: Innenschale
- 4: Karosserierahmen
- 5: Aufnahmenut
- 6: Klebstoffraupe
- 7: Himmel
- 8: Kederprofil
- 9: Bezugsmaterial
- 10: Dachöffnung
- 11: Abkantung
- 12: transparente Platte
- 13: Flanschrand
- 14: Beschichtung
- 15: Gummiprofil
- 16: Stegstreifen
- 17: Flanschstreifen
- 18: Flanschstreifen
- 19: Einprägung
- 20: Dichtungsprofil
- 21: Randstreifen
- 22: verdickter Bereich
- 23: Versteifungsprofil
- 24: topfartige Anschraubstellen

## Patentansprüche

1. Modulartiges Fahrzeugdach, insbesondere Kraftfahrzeugdach, das aus einer festen äußeren Dachhaut (2) als Außenschale und einer damit fest verbundenen aus Schaumkunststoff geformten Innenschale (3) bestehend sandwichartig ausgebildet ist, getrennt von der Fahrzeugkarosserie hergestellt, mit seinen Außenrändern auf einen Karosserierahmen (4) auflegbar und mit diesem fest verbindbar ist, wobei in der Dachhaut (2) eine Dachöffnung (10) für den Lichteintritt in den Fahrzeuginnenraum vorgesehen ist, und wobei der Dachöffnung (10) eine transparente Platte (12) zugeordnet ist, deren Außenfläche bei Anordnung innerhalb der Dachöffnung (10) etwa bündig mit der Außenfläche der Dachhaut (2) liegt, **dadurch gekennzeichnet, daß** die transparente Platte (12) innerhalb der Dachöffnung (10) fest angeordnet ist und mit einem umlaufend in die Dachöffnung (10) vorstehenden Flanschrand (13) der Innenschale (3) unter Abdichtung eines zwischen dem Außenumfang der transparenten Platte (12) und dem Umfangsrand der Dachöffnung (10) umlaufend vorgesehenen Spaltraums fest verbunden ist.

2. Fahrzeugdach nach Anspruch 1, **dadurch gekennzeichnet, daß** der Flanschrand (13) der Innenschale (3) an die transparente Platte (12) angeschäumt ist.

3. Fahrzeugdach nach Anspruch 2, **dadurch gekennzeichnet, daß** die transparente Platte (12) im Bereich des Flanschrandes (13) haftungsvermittelnd beschichtet ist.

4. Fahrzeugdach nach Anspruch 1, **dadurch gekennzeichnet, daß** die transparente Platte (12) auf den Flanschrand (13) der Innenschale (3) aufgeklebt ist.

5. Fahrzeugdach nach einem der Ansprüche 1 bis 4, **dadurch gekennzeichnet, daß** der Spaltraum zwischen dem Außenumfang der transparenten Platte (12) und dem Umfangsrand der Dachöffnung (10) mit dem Schaumkunststoff der Innenschale (3) ausgeschäumt ist.

6. Fahrzeugdach nach einem der Ansprüche 1 bis 4, **dadurch gekennzeichnet, daß** in den Spaltraum zwischen dem Außenumfang der transparenten Platte (12) und dem Umfangsrand der Dachöffnung (10) ein T-förmiges Gummiprofil (15) umlaufend mit seinem Stegstreifen (16) mittels des Schaumkunststoffs der Innenschale (3) eingeschäumt ist, während der eine seiner Flanschstreifen (18) den Umfangsrand der Dachöffnung (10) und der andere seiner Flanschstreifen (17) den Außenumfang der transparenten Platte (12) der Dachhaut (2) bzw. der transparenten Platte (12) dicht anliegend überlappt.

7. Fahrzeugdach nach Anspruch 6, **dadurch gekennzeichnet, daß** die äußere Dachhaut (2) um den Umfangsrand der Dachöffnung (10) umlaufend mit einer stufenförmigen Einprägung (19) zur bündigen Aufnahme des betreffenden Flanschstreifens (18) des T-förmigen Gummiprofils (15) versehen ist.

8. Fahrzeugdach nach einem der Ansprüche 1 bis 4, **dadurch gekennzeichnet, daß** der Spaltraum zwischen dem Außenumfang der transparenten Platte (12) und dem Umfangsrand der Dachöffnung (10) umlaufend durch ein am Umfangsrand festgelegtes elastisches Dichtungsprofil (20) geschlossen ist, das mit einem Randstreifen (21) umlaufend den Außenumfang der transparenten Platte (12) unterfängt.

9. Fahrzeugdach nach einem der Ansprüche 1 bis 4, **dadurch gekennzeichnet, daß** der Flanschrand (13) der Innenschale (3) an einem die Dachöffnung (10) rahmenartig umgebenden verdickten Bereich (22) der Innenschale (3) ausgebildet ist.

10. Fahrzeugdach nach Anspruch 9, **dadurch gekennzeichnet, daß** in den verdickten Bereich (22) der Innenschale (3) ein metallisches Versteifungsprofil (23) eingeschäumt ist, welches mit topfartigen Anschraubstellen (24) für Abschattungselemente od.dgl. versehen ist.

## Claims

1. A modular vehicle roof, in particular a motor vehicle roof, which is of sandwich-like construction, consisting of a strong outer roof skin (2) as outer shell and an inner shell (3) connected firmly thereto and moulded from foamed plastics, is produced separately from the vehicle bodywork, may be positioned with its outer edges on a bodywork frame (4) and may be firmly connected therewith, whereby a roof opening (10) being provided in the roof skin (2) for light to enter the vehicle interior, and whereby a transparent panel is associated with the roof opening (10), the outer surface of which panel when located within the roof opening lies approximately flush with the outer surface of the roof skin (2) **characterized in that** the transparent panel (12) is fixedly arranged within the roof opening (10) and is firmely connected with a flange edge (13) of the inner shell, projecting circumferentially into the roof opening thereby sealing a gap provided circumferentially between the outer circumference of the transparent panel (12) and the circumferential edge of the roof opening (10).

2. A vehicle roof according to claim 1, **characterized in that** the flange edge (13) of the inner shell (3) is foamed onto the transparent panel (12).

3. A vehicle roof according to claim 2, **characterized in that** the transparent panel (12) is coated with an adhesion promoter in the area of the flange edge (13).

4. A vehicle roof according to claim 1, **characterized in that** the transparent panel (12) is bonded to the flange edge (13) of the inner shell (3).

5. A vehicle roof according to one of claims 1 to 4, **characterized in that** the gap between the outer circumference of the transparent panel (12) and the circumferential edge of the roof opening (10) is foam-filled with the foamed plastics of the inner shell (3).

6. A vehicle roof according to one of claims 1 to 4, **characterized in that** a T-shaped rubber profile (15) is foamed circumferentially with its web strip (16) into the gap between the outer circumference of the transparent panel (12) and the circumferential edge of the roof opening (10) by means of the foamed plastics of the inner shell (3), while one of its flange strips (18) overlaps the circumferential edge of the roof opening (10) and the other one of its flange strips (17) overlaps the outer circumference of the transparent panel (12) of the roof skin (2) or the transparent panel (12), lying tightly thereagainst.

7. A vehicle roof according to claim 6, **characterized in that** the outer roof skin (2) is provided circumferentially around the circumferential edge of the roof opening (10) with a stepped depression (19) for flush accommodation of the relevant flange strip (18) of the T-shaped rubber profile (15).

8. A vehicle roof according to one of claims 1 to 4, **characterized in that** the gab between the outer circumference of the transparent panel (12) and the circumferential edge of the roof opening (10) is closed circumferentially by a resilient sealing profile (20) attached to the circumferential edge, which sealing profile (20) holds the outer circumference of the transparent panel (12) circumferentially from below by means of an edge strip (21).

9. A vehicle roof according to one of claims 1 to 4, **characterized in that** the flange edge (13) of the inner shell (3) is constructed on a thicker area (22) of the inner shell (3) surrounding the roof opening (10) in the manner of a frame.

10. A vehicle according to claim 9, **characterized in that** a metallic reinforcing profile (23) is foamed into the thicker area (22) of the inner shell (3), which reinforcing profile (23) is provided with cup-type screw points (24) for shading elements or the like.

## Revendications

1. Toit modulaire de véhicule, notamment toit de véhicule automobile, qui est d'une configuration du type en sandwich en étant constitué d'une enveloppe de toit extérieure (2) en tant que coque extérieure et d'une coque intérieure (3) formée d'une mousse synthétique et liée de manière fixe à la coque extérieure, le toit étant fabriqué de manière séparée de la carrosserie de véhicule et pouvant être appliqué avec ses bords extérieurs sur un cadre de carrosserie (4) et être assemblé de manière fixe à celui-ci, une ouverture de toit (10) pour l'entrée de lumière dans l'habitacle intérieur du véhicule étant prévue dans l'enveloppe de toit (2), et à l'ouverture de toit (10) étant associée une plaque transparente (12) dont la surface extérieure, lorsque la plaque est disposée à l'intérieur de l'ouverture de toit (10), arrive sensiblement au ras de la surface extérieure de l'enveloppe de toit (2), **caractérisé en ce que** la plaque transparente (12) est agencée de manière fixe à l'intérieur de l'ouverture de toit (10), et est reliée de manière fixe à une bordure en flasque (13) de la coque intérieure (3), qui fait saillie vers l'intérieur de l'ouverture de toit (10) le long de la périphérie de cette dernière, tout en produisant l'étanchéité d'un espace interstitiel prévu le long du pourtour entre la périphérie extérieure de la plaque transparente (12) et la bordure périphérique de l'ouverture de toit (10).

2. Toit de véhicule selon la revendication 1, **caractérisé en ce que** la bordure en flasque (13) de la coque intérieure (3) est moulée par moussage sur la plaque transparente (12).

3. Toit de véhicule selon- la revendication 2, **caractérisé en ce que** la plaque transparente (12) est revêtue, dans la zone correspondant à la bordure en flasque (13), de manière à favoriser l'adhérence.

4. Toit de véhicule selon la revendication 1, **caractérisé en ce que** la plaque transparente (12) est collée sur la bordure en flasque (13) de la coque intérieure (3).

5. Toit de véhicule selon l'une des revendications 1 à 4, **caractérisé en ce que** l'espace interstitiel entre la périphérie extérieure de la plaque transparente (12) et la bordure périphérique de l'ouverture de toit (10) est comblé par moulage par moussage avec la mousse synthétique de la coque intérieure (3).

6. Toit de véhicule selon l'une des revendications 1 à 4, **caractérisé en ce que** dans l'espace interstitiel entre la périphérie extérieure de la plaque transparente (12) et la bordure périphérique de l'ouverture de toit (10), est encastrée de manière périphérique, par moulage par moussage avec la mousse synthétique de la coque intérieure (3), la branche d'âme (16) d'un profilé de caoutchouc (15) en forme de T, tandis que l'une (18) de ses branches d'aile surmonte en s'y appliquant de manière étanche, la bordure périphérique de l'ouverture de toit (10) de l'enveloppe de toit (2), et l'autre (17) de ses branches d'aile surmonte en s'y appliquant de manière étanche, la périphérie extérieure de la plaque transparente (12).

7. Toit de véhicule selon la revendication 6, **caractérisé en ce que** l'enveloppe de toit (2) extérieure est pourvue sur tout le long de la bordure périphérique de l'ouverture de toit (10), d'un décrochement en retrait (19) en forme de gradin, destiné à recevoir de façon arasée la branche d'aile (18) correspondante du profilé de caoutchouc (15) en forme de T.

8. Toit de véhicule selon l'une des revendications 1 à 4, **caractérisé en ce que** l'espace interstitiel entre la périphérie extérieure de la plaque transparente (12) et la bordure périphérique de l'ouverture de toit (10) est fermé sur tout le pourtour par un profilé d'étanchéité (20) élastique fixé à la bordure périphérique, et qui, avec une bande de bordure (21), s'engage le long de tout le pourtour sous la périphérie extérieure de la plaque transparente (12).

9. Toit de véhicule selon l'une des revendications 1 à 4, **caractérisé en ce que** la bordure en flasque (13) de la coque intérieure (3) est réalisée dans une zone de renflement (22) de la coque intérieure (3), qui entoure à la manière d'un cadre l'ouverture de toit (10).

10. Toit de véhicule selon la revendication 9, **caractérisé en ce que** dans la zone de renflement (22) de la coque intérieure (3) est noyé par moulage par moussage, un profilé de renfort (23) métallique, qui est pourvu de points de vissage (24) en forme de coupelle, pour des éléments d'occultation ou analogues.
